# EUROPÄISCHE PATENTSCHRIFT

(11) **EP 4 244 829 B1**
(45) Veröffentlichungstag und Bekanntmachung des Hinweises auf die Patenterteilung: **13.08.2025**
(21) Anmeldenummer: 21806176.0
(22) Anmeldetag: 03.11.2021
(51) Int. Cl.: G06V 20/56

(54) **VERFAHREN ZUR ERFASSUNG EINES UMFELDS EINES ERSTEN SENSORSYSTEMS**
METHOD FOR DETECTING AN ENVIRONMENT OF A FIRST SENSOR SYSTEM
PROCÉDÉ DE DÉTECTION D'UN ENVIRONNEMENT D'UN PREMIER SYSTÈME DE CAPTEUR

(30) Priorität: 10.11.2020 DE 102020214123
(43) Veröffentlichungstag der Anmeldung: 20.09.2023
(73) Patentinhaber: Robert Bosch GmbH, 70442 Stuttgart (DE)
(72) Erfinder: STAL, Rainer, 71063 Sindelfingen (DE); GUMPP, Thomas, 71272 Renningen (DE); CONDURACHE, Alexandru Paul, 71272 Renningen (DE); GLAESER, Claudius, 71254 Ditzingen (DE); EBERT, Jasmin, 69126 Heidelberg (DE); ULRICH, Michael, 71065 Sindelfingen (DE); MUENZNER, Sebastian, 71638 Ludwigsburg (DE); FAION, Florian, 76131 Karlsruhe (DE); ROSENBAUM, Lars, 35094 Lahntal (DE); TIMM, Fabian, 71272 Renningen (DE); DREWS, Florian, 71272 Renningen (DE)
(86) Internationale Anmeldenummer: PCT/EP2021/080460
(87) Internationale Veröffentlichungsnummer: WO 2022/101063

(56) Entgegenhaltungen:
- RICSON CHENG ET AL: "Geometry-Aware Recurrent Neural Networks for Active Visual Recognition", ARXIV.ORG, CORNELL UNIVERSITY LIBRARY, 201 OLIN LIBRARY CORNELL UNIVERSITY ITHACA, NY 14853, 3 November 2018 (2018-11-03), XP081045689
- CHEN SONGLE ET AL: "VERAM: View-Enhanced Recurrent Attention Model for 3D Shape Classification", IEEE TRANSACTIONS ON VISUALIZATION AND COMPUTER GRAPHICS, IEEE, USA, vol. 25, no. 12, 1 December 2019 (2019-12-01), pages 3244 - 3257, XP011752108, ISSN: 1077-2626, [retrieved on 20191025], DOI: 10.1109/TVCG.2018.2866793
- "Pattern Recognition : 5th Asian Conference, ACPR 2019, Auckland, New Zealand, November 26-29, 2019, Revised Selected Papers, Part II", vol. 9909, 5 August 2016, SPRINGER INTERNATIONAL PUBLISHING, Cham, ISBN: 978-3-030-41298-2, ISSN: 0302-9743, article JAYARAMAN DINESH ET AL: "Look-Ahead Before You Leap: End-to-End Active Recognition by Forecasting the Effect of Motion : 14th European Conference, Amsterdam, The Netherlands, October 11-14, 2016, Proceedings, Part V", pages: 489 - 505, XP055886426, DOI: 10.1007/978-3-319-46454-1_30

## Beschreibung

### Stand der Technik

Die Automatisierung des Fahrens geht einher mit der Ausstattung von Fahrzeugen mit immer umfangreicheren und leistungsfähigeren Sensorsystemen zur Umfelderfassung und zur Unterstützung von Fahrfunktionen und/oder zur zumindest teilautomatisierten Steuerung und Führung des Fahrzeugs.

Dazu werden häufig mehrere unterschiedliche Sensoren unterschiedlicher Modalität, bzw. basierend auf unterschiedlichen Technologien, eingesetzt, wie beispielsweise Radar-Sensoren und Video-Sensoren. Die Daten, die von den jeweiligen Sensoren unterschiedlicher Modalität generiert werden, werden typischerweise zunächst einzeln unabhängig voneinander verarbeitet, d.h. die empfangenen Radar-Wellen werden unabhängig von den optischen Sensoren verarbeitet. Erst in den späteren Verarbeitungsschritten erfolgt eine Verknüpfung oder Verrechnung der Daten, beispielsweise durch eine Assoziation von Radar-Reflexen und Video-Pixeln oder eine Fusion von berechneten Radar- und Video-Objekten und auch in höher integrierten Systemen messen die Sensoren unabhängig voneinander.

Eine Video-Kamera sendet beispielsweise ihre Bilder an eine Erfassung-Vorrichtung und ein Radar-Sensor sendet ebenfalls seine Signale an diese Erfassung-Vorrichtung. Der relevante Stand der Technik umfasst: R. Cheng et al., Geometry-Aware Recurrent Neural Networks for Active Visual Recognition, 03-11-2018, arXiv:1811.01292; S. Chen et al., VERAM: View-Enhanced Recurrent Attention Model for 3D Shape Classification in IEEE Transactions on Visualization & Computer Graphics, vol. 25, no. 12, pp. 3244-3257, Dec. 2019, doi: 10.1109/TVCG.2018.2866793; D. Jayaramam and K. Grauman, Look-ahead before you leap: end-to-end active recognition by forecasting the effect of motion, 05-08-2016, arXiv:1605.00164v2.

### Offenbarung der Erfindung

Wird eine Video-Kamera als ein nicht steuerbares Sensor-System zum assistierten oder automatisierten Fahren betrachtet, das stets möglichst die gesamte Szene detektiert, so ist es vergleichbar zur visuellen Wahrnehmung eines Fahrers einer mobilen Plattform. Allerdings verwendet ein Fahrer zusätzlich Innen- und Außenspiegel, um das gesamte Fahrzeugumfeld zu erfassen, und bei Dämmerung oder nachts werden weitere Hilfsmittel, wie Abblendlicht oder Fernlicht, für eine bessere visuelle Wahrnehmung verwendet.

Eine erhöhte Aufmerksamkeit des Fahrers ist dabei eher lokal, d.h. scharfes Sehen und die entsprechende Verarbeitung im Gehirn erfolgt beim Fahren primär nach vorn. In der Peripherie hingegen verarbeitet der Mensch vornehmlich Bewegungen. Somit richtet der Fahrer sein Sehen und seine Aufmerksamkeit aktiv und situativ auf die relevanten Bereiche des Umfelds - eine visuelle Erfassung des gesamten 360°-Umfelds zu jeder Zeit kann ein einzelner Fahrer nicht leisten.

Eine entsprechende gezielte Verwendung und aktive Verknüpfung von mehreren Sensoren ähnlich zur menschlichen Wahrnehmung (scan-and-watch), kann Systeme zur Fahrerassistenz oder zum automatisierten Fahren, insbesondere bei der Verwendung von Sensoren unterschiedlicher Modalität, verbessern.

Entsprechend Aspekten der Erfindung wird ein Verfahren zur Erfassung eines Umfelds eines ersten Sensorsystems, ein Verfahren zum Trainieren eines neuronalen Netzwerks, ein neuronales Netzwerk und eine Erfassungs-Vorrichtung, gemäß den Merkmalen der unabhängigen Ansprüche vorgeschlagen. Vorteilhafte Ausgestaltungen sind Gegenstand der abhängigen Ansprüche sowie der nachfolgenden Beschreibung.

In dieser gesamten Beschreibung der Erfindung ist die Abfolge von Verfahrensschritten so dargestellt, dass das Verfahren leicht nachvollziehbar ist. Der Fachmann wird aber erkennen, dass viele der Verfahrensschritte auch in einer anderen Reihenfolge durchlaufen werden können und zu dem gleichen oder einem entsprechenden Ergebnis führen. In diesem Sinne kann die Reihenfolge der Verfahrensschritte entsprechend geändert werden. Einige Merkmale sind mit Zählwörtern versehen, um die Lesbarkeit zu verbessern oder die Zuordnung eindeutiger zu machen, dies impliziert aber nicht ein Vorhandensein bestimmter Merkmale.

Gemäß einem Aspekt wird ein Verfahren zur Erfassung eines Umfelds eines ersten Sensorsystems, mit den folgenden Schritten vorgeschlagen:
In einem Schritt wird eine zeitliche Sequenz von Daten des ersten Sensorsystems zur Erfassung des Umfelds bereitgestellt. In einem weiteren Schritt wird ein Eingangstensor mit der zeitlichen Sequenz von Daten des ersten Sensorsystems für ein trainiertes neuronales Netz generiert, wobei das neuronale Netz eingerichtet und trainiert wurde, basierend auf dem Eingangstensor zumindest einen Teilbereich des Umfelds zur Verbesserung der Erfassung des Umfelds mittels eines zweiten Sensorsystems zu identifizieren. In einem weiteren Schritt wird ein Steuersignals für das zweite Sensorsystem mittels eines Ausgangssignals des trainierten neuronalen Netzwerks generiert, um in dem zumindest einen Teilbereich die Erfassung des Umfelds zu verbessern.

Bei neuronalen Netzwerken kann das Signal an einer Verbindung künstlicher Neuronen eine reelle Zahl sein, und der Ausgang eines künstlichen Neurons wird durch eine nichtlineare Funktion der Summe seiner Eingänge berechnet. Die Verbindungen der künstlichen Neuronen haben typischerweise ein Gewicht, das sich mit fortschreitendem Lernen anpasst. Das Gewicht erhöht oder verringert die Stärke des Signals an einer Verbindung. Künstliche Neuronen können eine Schwelle aufweisen, so dass nur dann ein Signal ausgegeben wird, wenn das Gesamtsignal diese Schwelle überschreitet.

Typischerweise wird eine Vielzahl von künstlichen Neuronen in Schichten zusammengefasst. Unterschiedliche Schichten führen möglicherweise unterschiedliche Arten von Transformationen für ihre Eingaben durch. Signale wandern von der ersten Schicht, der Eingabeschicht, zur letzten Schicht, der Ausgabeschicht; möglicherweise nach mehrmaligem Durchlaufen der Schichten.

Grundsätzlich bestehen neuronale Netze aus mindestens drei Schichten von Neuronen: einer Eingabe-Schicht, einer Zwischen-Schicht (hidden layer) und einer Ausgabe-Schicht. Das bedeutet, alle Neuronen des Netzwerks sind in Schichten eingeteilt, wobei ein Neuron einer Schicht immer mit allen Neuronen der nächsten Schicht verbunden ist. Bis auf die Eingabeschicht bestehen die unterschiedlichen Schichten aus Neuronen, die einer nichtlinearen Aktivierungsfunktion unterliegen, und mit den Neuronen der nächsten Schicht verbunden sind. Ein tiefes neuronales Netz kann viele solcher ZwischenSchichten aufweisen.

Solche neuronalen Netzwerke müssen für ihre spezifische Aufgabe trainiert werden. Dabei erhält jedes Neuron der entsprechenden Architektur des neuronalen Netzwerks z. B. ein zufälliges Anfangs-Gewicht. Dann werden die Eingangs-Daten in das Netz gegeben, und jedes Neuron gewichtet die EingangsSignale mit seinem Gewicht und gibt das Ergebnis weiter an die Neuronen der nächsten Schicht. An der Output-Schicht wird dann das Gesamt-Ergebnis bereitgestellt. Die Größe des Fehlers kann berechnet werden, sowie der Anteil, den jedes Neuron an diesem Fehler hatte, um dann das Gewicht jedes Neurons in die Richtung zu verändern, die den Fehler minimiert. Dann erfolgen rekursiv Durchläufe, erneute Messungen des Fehlers und Anpassung der Gewichte, bis der Fehler unter einer vorgegebenen Grenze liegt.

Beispielsweise kann das Verfahren mit einem passiven Sensor als erstes Sensorsystem und einem aktiven Sensor als zweites Sensorsystem durchgeführt werden, die entweder direkt oder durch eine Verarbeitungseinheit verbunden sind. Dabei misst und verarbeitet das erste Sensorsystem das Umfeld des ersten Sensorsystems; mit dessen Daten kann dann entsprechend dem Verfahren ein Steuersignal generiert werden, das dem zweiten Sensorsystem bereitgestellt wird, damit dieses entsprechend dem Steuersignal in dem Umfeld des ersten Sensorsystems Teilbereiche identifiziert, deren Erkennung mit dem zweiten Sensorsystem die Erfassung des Umfelds verbessern kann. Beispielsweise kann das Steuersignal für den aktiven Sensor, d. h. für das zweite Sensorsystem, das zweite Sensorsystem steuern, eine gewisse Region des Umfelds des ersten Sensorsystems, wie beispielsweise einen Winkel und/oder einen Abstand und/oder eine Elevation, genauer zu bestimmen.

Dabei beschränkt sich das Steuersignal nicht darauf, nur solche Bereiche genau zu bestimmen in denen Objekte bestimmt wurden, sondern das Steuersignal kann das zweite Sensorsystem steuern, geeignete Teilbereiche oder Regionen des Umfelds des ersten Sensorsystems genauer zu bestimmen, um eine zeitlich frühere und/oder genauere Identifizierung und/oder Erkennung und/oder Bestimmung von Objekten des Umfelds des ersten Sensorsystems zu erreichen. Darüber hinaus ist es mit dem beschriebenen Verfahren zur Erfassung des Umfelds des ersten Sensorsystems nicht notwendig, Expertenwissen in das Verfahren einzubringen, da das entsprechende Wissen mittels des neuronalen Netzwerks datengetrieben gelernt werden kann.

Durch die Verwendung des Verfahrens ergibt sich vorteilhaft eine erhöhte Robustheit und Performance bei der Erfassung eines Umfelds für relevante Verkehrsteilnehmer, wie z.B. Fahrzeuge, Fußgänger, etc., ohne Expertenwissen vorauszusetzen. Denn bei einer klassischen modell-basierten Steuerung des aktiven Sensors wäre Expertenwissen nötig, um Verbesserungspotentiale zu identifizieren und das zweite Sensorsystem geeignet zu steuern.

Weiterhin ergibt sich vorteilhafterweise ein performanteres und kostengünstigeres Gesamtsystem für die gewählte Aufgabe, da die Sensorik und die Algorithmen zur Erkennung der relevanten Verkehrsteilnehmer gemeinsam optimiert werden.

Weiterhin ergibt sich vorteilhafterweise eine anwendungsbezogene Erkennung relevanter Objekte und eine einfache Erweiterbarkeit des Verfahrens.

Mit anderen Worten kann mit diesem Verfahren eine gerichtete Bestimmung des Umfelds des ersten Sensorsystems, beispielsweise ergänzt mit Daten des zweiten Sensorsystems, erfolgen, nachdem beispielsweise ein Objekt oder ein Teilbereich des Umfelds mit Daten des ersten Sensor-Systems bestimmt wurde, um das Objekt und/oder den Teilbereich genauer zu bestimmen.

Dabei kann beispielsweise eine Ausdehnung und/oder eine Position und/oder eine Region und/oder ein Winkel und/oder ein Abstand und/oder eine Elevation und/oder eine Geschwindigkeit und/oder ein zukünftiger wahrscheinlicher Ort und/oder eine Region mit Objekten, die unsicher bestimmt wurden und/oder eine Objektdimension, die mit Unsicherheit bestimmt wurde, mit dem zweiten Sensorsystem genauer bestimmt werden.

Das Steuersignal für das zweite Sensorsystem kann eine räumliche Erfassung des Umfelds betreffen und/oder es kann das Steuersignal auch komplex aufgebaut sein und beispielsweise eine Belichtung des zweiten Sensorsystems, wie beispielsweise eines Videosystems, betreffen. Das Steuersignal für das zweite Sensorsystem kann somit alle Eigenschaften des zweiten Sensorsystems betreffen, über dessen Steuerung die Erfassung des Umfeldes durch Verwendung des zweiten Sensorsystems verändert werden kann.

Für das Verfahren zur Erfassung eines Umfelds eines ersten Sensorsystems werden keine erkannten Objekte vorausgesetzt. Vielmehr werden Merkmale aus dem Umfeld innerhalb des neuronalen Netzwerkes extrahiert, die dazu dienen, einen Teilbereich zur verbesserten Erfassung des Umfelds daraus abzuleiten. Dabei kann es sich unter anderem um strukturelle Verdeckungen, wie beispielsweise Gebäude oder Vegetation und/oder eine Straßentopologie bzw. einem Straßenverlauf und/oder um Objekte wie Fahrzeuge und Fußgänger handeln.

Insbesondere können auch Teilbereiche genauer erfasst werden, die kein erkanntes Objekt aufweisen, jedoch eine hohe Wahrscheinlichkeit besitzen, dass in Zukunft dort ein Objekt erscheinen könnte.

Mit dem Verfahren zur Erfassung eines Umfelds des ersten Sensorsystems können Objekte schneller und früher erkannt werden, da auch Teilbereiche erfasst werden, in denen zuvor noch kein Objekt erkannt wurde.

Darüber hinaus ist das Verfahren anwendbar auf Anwendungen, die keine Objekterkennung benötigen, wie beispielsweise eine semantische Segmentierung und/oder eine Erkennung von Fahrbahnbegrenzungen und/oder ein Kompensieren von Sensor-Degradationen in einem Mehr-Sensor-System.

Mit diesem Verfahren kann die Robustheit und Erkennungsrate für relevante Verkehrsteilnehmer, wie z.B. Fahrzeuge, Fußgänger, etc., regulatorische Elemente, wie zum Beispiel Begrenzungs-Linien, Fahrspuren, Bürgersteige, etc., gesteigert werden. Darüber hinaus kann mit einem steuerbaren zweiten Sensorsystem sehr gezielt und hochgenau ein kleiner Bereich des Umfelds erfasst und verarbeitet werden. Insbesondere bei kleinen Objekten in großen Abständen, wie beispielsweise verlorenen Gegenständen (lost cargo), bei Teilverdeckungen, wie zum Beispiel ein Fußgänger hinter einem PKW, oder zur Lokalisierung möglicher Hindernisse, zur präzisen Detektion von Markern, wie Pfosten, Gullydeckeln, Ampeln etc.

Darüber hinaus kann mit diesem Verfahren eine einfachere Absicherung von autonomen Systemen durch erhöhte Redundanz bereits auf Sensorik-Ebene erreicht werden, da beispielsweise das steuerbare zweite Sensor-System die Messung des ersten Sensor-Systems bestätigt oder falsifiziert. Somit kann mit diesem Verfahren ein wirtschaftlich günstigeres Gesamt-Sensorsystem aus zumindest einem ersten Sensorsystem und einem steuerbaren zweiten Sensorsystem mit einer verbesserten Gesamtperformance bereitgestellt werden. Darüber hinaus kann mit diesem Verfahren auch ein das gesamte Umfeld langsam messender Sensor, als erstes Sensor-System, mit einem in einem kleineren Erfassungsbereichs des Umfelds schneller messenden Sensor, als zweites Sensor-System, kombiniert werden.

Gemäß einem Aspekt wird vorgeschlagen, dass das neuronale Netz eingerichtet ist, Zeitreihen von Daten zu verarbeiten und/oder einen zeitabhängigen Zustand des neuronalen Netzwerks zu charakterisieren. Ein so eingerichtetes neuronales Netz ist für das beschriebene Verfahren besonders geeignet.

Gemäß einem Aspekt wird vorgeschlagen, dass das neuronale Netzwerk ein rekurrentes neuronales Netzwerk ist.

Als rekurrente bzw. rückgekoppelte neuronale Netzwerke bezeichnet man neuronale Netzwerke, die sich im Gegensatz zu anderen Netzwerken durch Verbindungen von Neuronen einer Schicht zu Neuronen derselben oder einer vorangegangenen Schicht auszeichnen. Wobei durch die Rückkopplung ein Zustandsvektor dargestellt werden kann, der von Zeitschritt zu Zeitschritt weitergereicht wird und gegebenenfalls verändert wird. Durch die Verwendung eines rekurrenten neuronalen Netzwerks kann das Verfahren besonders geeignet für das Generieren eines entsprechenden Steuersignals trainiert werden, da mit einem solchen rekurrenten neuronalen Netzwerk auf Sensordaten aus vorherigen Zeitschritten für einen aktuellen Zeitschritt zugegriffen werden kann. Dadurch kann die Erfassung eines Umfeldes des ersten Sensorsystems verbessert werden.

Gemäß einem Aspekt wird vorgeschlagen, dass der Eingangstensor des neuronalen Netzwerks Daten des zweiten Sensorsystems aufweist, um die Erfassung des Umfelds des ersten Sensorsystems zu verbessern. Vorteilhafterweise kann mit den zusätzlichen Daten des zweiten Sensorsystems die Repräsentation des Umfeldes des ersten Sensorsystems verbessert werden. Dabei kann der Eingangstensor die Daten des zweiten Sensorsystems aus einem aktuellen Zeitschritt und/oder einem vorherigen Zeitschritt aufweisen. Das Trainieren des neuronalen Netzwerks kann entsprechend dem jeweiligen Zeitschritt in dem die Daten des zweiten Sensorsystems generiert werden angepasst werden.

Gemäß einem Aspekt wird vorgeschlagen, dass der Eingangstensor des neuronalen Netzwerks Daten des zweiten Sensorsystems aus einem, einem aktuellen Zeitschritt vorhergehenden, Zeitschritt aufweist, um die Erfassung des Umfelds des ersten Sensorsystems zu verbessern.

Vorteilhafterweise beruht dadurch das generierte Steuersignal unter anderem auf den Sensordaten des zweiten Sensorsystems aus dem vorherigen Zeitschritt und kann somit die Repräsentation des Umfeldes des ersten Sensorsystems mit den Daten des zweiten Sensorsystems für das neuronale Netz verbessern.

Gemäß einem Aspekt wird vorgeschlagen, dass der Eingangstensor des neuronalen Netzwerks Daten des zweiten Sensorsystems aus einem aktuellen Zeitschritt aufweist, und das zweite Sensorsystem mit dem generierten Steuersignal aus einem vorherigen Zeitschritt angesteuert wird, um die Erfassung des Umfelds des ersten Sensorsystems zu verbessern. Vorteilhafterweise kann die Repräsentation des Umfeldes des ersten Sensorsystems mit den Daten des zweiten Sensorsystems aus dem aktuellen Zeitschritt und einem Steuersignal aus einem vorherigen Zeitschritt verbessert werden, da die Daten der jeweiligen Sensorsysteme im gleichen Zeitschritt generiert werden und somit eine höhere Synchronität aufweisen. Das Trainieren des neuronalen Netzwerks kann entsprechend dem jeweiligen Zeitschritt in dem die Daten des zweiten Sensorsystems generiert werden angepasst werden.

Gemäß einem Aspekt wird vorgeschlagen, dass das neuronale Netz eingerichtet und trainiert ist, eine Objektliste aus dem Umfeld des ersten Sensorsystems zu erstellen. Vorteilhafterweise kann man mit einer solchen Objektliste das neuronale Netz trainieren oder die so identifizierten Objekte der Objektliste auch anderen aktiven Systemen zur Erfassung des Umfelds bereitstellen.

Gemäß einem Aspekt wird vorgeschlagen, dass das erste Sensorsystem ein passives Sensorsystem und das zweite Sensorsystem ein aktives Sensorsystem ist.

Dabei kann ein aktives Sensorsystem ein Sensorsystem sein, dessen Signal bzw. dessen generierte Daten bzw. dessen Detektionseigenschaft abhängig von einem Steuersignal in Bezug auf eine Erfassung eines Umfeldes selektiv an bestimmte Anforderung der Detektion adaptiert und/oder gesteuert werden kann. Solche Detektionseigenschaften des steuerbaren Sensorsystems können insbesondere eine Position eines Objektes im Erfassungsbereich des steuerbaren Sensorsystems betreffen, wie beispielsweise eine Bestimmung in selektierten Teilbereichen und/oder eingeschränkten Entfernungsbereichen und/oder Höhenwinkel-Bereichen. Es kann aber auch Messeigenschaften betreffen, wie eine Orts-Auflösung etc. Entsprechend kann ein steuerbares Sensorsystem ein aktives Sensorsystem sein. Beispiele für steuerbare Sensorsysteme sind Radar-Sensoren, LIDAR-Sensoren, Infrarot-Sensoren, Time-of-flight-Sensoren und optische Sensoren.

Verallgemeinert können Sensoren verwendet werden, die mit einer auf das Objekt bzw. die Umgebung einwirkenden und steuerbaren Signalquelle steuerbar sind, wie beispielsweise Thermografie-Sensoren, die Temperatur-Änderungen bestimmen, die an einer gezielten Stelle des zu bestimmenden Objekts durch Einbringen von Wirbelströmen oder anderem Wärmeeintrag gesteuert werden.

Generell kann für die eingebrachte steuerbare Signalquelle auch die Wellenlänge der Signalquelle verändert werden, z.B. im Bereich von 0,7µm - 1000µm für eine Infrarotquelle oder im Bereich von 300 - 1600nm für einen LIDAR-Sensor.

Gemäß einem Aspekt wird vorgeschlagen, dass mittels des Steuersignals die Daten des zweite Sensorsystems reduziert werden.

Alternativ oder zusätzlich kann die Bestimmung des Objektes mit dem ersten Sensorsystem auch von dem steuerbaren zweiten Sensorsystem durch eine entsprechende Veränderung der Detektionseigenschaften des steuerbaren zweiten Sensorsystems durchgeführt werden, wobei diese Veränderung der Detektionseigenschaften sich insbesondere auf eine räumliche Größe eines Bestimmungsbereichs des Umfelds der mobilen Plattform bezieht.

Durch eine solche Nutzung der Ansteuerung des zweiten Sensorsystems kann beispielsweise die Menge der Sensordaten reduziert werden, um Rechenzeit und Bandbreite zu sparen. Ein Beispiel hierfür ist ein Video-Sensor, der auf das Steuersignal hin, lediglich einen ausgewählten Bildausschnitt liefert, anstatt des gesamten Bildes.

Gemäß einem Aspekt wird vorgeschlagen, dass die Daten des ersten Sensorsystems einen Lenkwinkel einer mobilen Plattform und/oder geographische Kartendaten und/oder einen geplanten Routenverlauf und/oder eine Kategorie einer Straße und/oder Wetterbedingungen aufweisen.

Alternativ oder zusätzlich kann das erste Sensorsystem auch ein aktives Sensorsystem sein, dass entweder entsprechend einem passiven Sensorsystem eingesetzt wird oder durch eine andere Steuergröße, wie beispielsweise ein Lenkwinkelsignal einer mobilen Plattform und/oder ein Lokalisierungssignal gesteuert wird.

Für eine Ansteuerung des zweiten Sensorsystems mittels Kartendaten kann das erste Sensorsystem ein Lokalisierungssensor sein, der eine Position auf einer Karte bzw. in einer Umgebung bestimmt. Anhand der Kartendaten können ebenfalls Merkmale sowie Teilbereiche für eine verbesserte Erfassung des Umfelds abgeleitet werden.

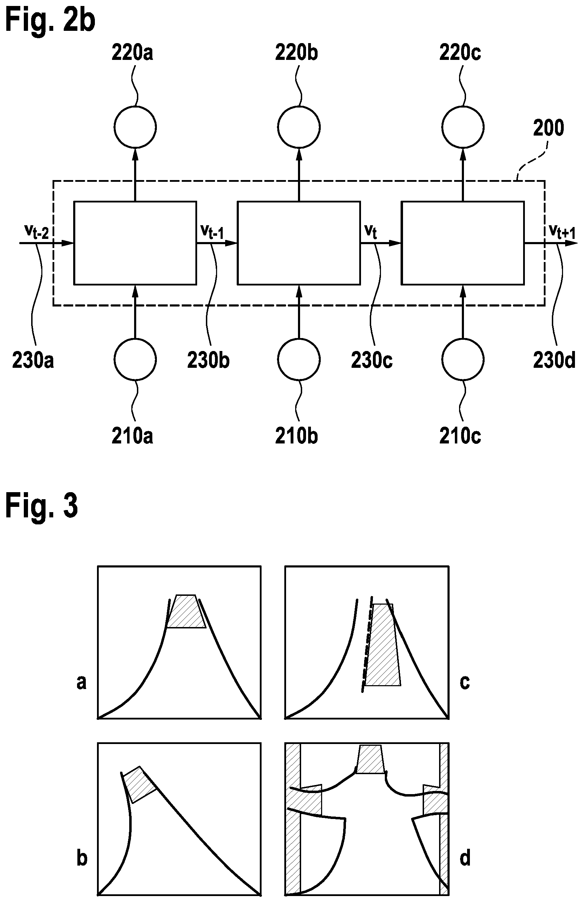

Ein Beispiel für sinnvolle daraus ableitbare Teilbereiche sind der Straßenverlauf und insbesondere der Fluchtpunkt der Straße. In der Nähe des Fluchtpunkts werden Objekte das erste Mal sichtbar. Dies ist in den Figuren 3a bis d für ein paar Beispiele dargestellt. Durch Schraffuren hervorgehoben sind die Teilbereiche, die genauer erfasst werden sollen.

Alternativ oder zusätzlich kann ein einzelner aktiver Sensor als zweites Sensorsystem verwendet werden, ohne dass die Daten des zweiten Sensorsystems für das Generieren eines Steuersignals genutzt werden, und auch keine Daten von einem ersten Sensorsystem dem neuronalen Netzwerk als Eingangstensor bereitgestellt werden. Der Eingangstensor für das neuronale Netzwerk weist dann für die Generierung des Steuersignals beispielsweise vorhandene Signale einer mobilen Plattform auf, mit denen entweder allein oder gemeinsam das trainierte neuronale Netzwerk ein Steuersignal für das zweite Sensorsystem generiert. Beispiele für solche Eingangsdaten sind: ein Lenkwinkel einer mobilen Plattform und/oder Kartendaten und/oder ein Verlauf einer geplanten Route für eine mobile Plattform und/oder eine Straßenkategorie (Stadt, Autobahn, ...) und/oder Wetterbedingungen.

Alternativ oder zusätzlich kann der Eingangstensor eine Vielzahl von zeitlichen Sequenzen von Daten einer Vielzahl von ersten Sensorsystem aufweisen. Alternativ oder zusätzlich kann das erste Sensorsystem eine Vielzahl von Steuersignalen generieren, die einer Vielzahl von aktiven Sensorsystemen bereitgestellt werden.

Gemäß einem Aspekt wird vorgeschlagen, dass das erste Sensorsystem ein optisches Kamerasystem ist und das zweite Sensorsystem ein LIDAR-Sensor und/oder ein RADAR-Sensor und/oder ein Ultraschallsensor ist.

Optisches Kamerasystem kann eine optische Kamera im engeren Sinne sein oder ein Videosystem sein.

Gemäß einem Aspekt wird vorgeschlagen, dass das erste Sensorsystem das gleiche Sensorsystem wie das zweite Sensorsystem ist; und das Steuersignal von dem Sensorsystem in einem nachfolgenden Zeitschritt für eine verbesserte Erfassung des Umfelds verwendet wird.

Ein solcher nachfolgender Zeitschritt kann der jeweils folgende Zeitschritt sein.

Die Eingangsdaten für das neuronale Netzwerk können entsprechend diesem Aspekt keine Daten von einem ersten Sensorsystem aufweisen. Womit die Ansteuerung des zweiten Sensorsystems insbesondere auf den Daten des zweiten Sensorsystems beruhen kann, die in einem dem aktuellen Zeitschritt vorhergehenden Zeitschritt generiert wurden.

Beispielsweise kann ein aktiver LIDAR-Sensor, im zeitlichen Wechsel in einem "aktiven" und "passiven" Modus betrieben werden. Im "passiven" Modus kann ein Überblick über die Szene der Umgebung generiert werden, indem das gesamte Sichtfeld des zweiten Sensorsystems mit geringer örtlichen Auflösung erfasst wird. Mit den gewonnenen Informationen können im nächsten Zeitschritt im "aktiven" Modus kleine Bereiche des Sichtfelds sehr genau vermessen werden.

Gemäß einem Aspekt wird vorgeschlagen, dass das Steuersignal das zweite Sensorsystem steuert, den Teilbereich der Umgebung zu erfassen, um die Erfassung des Umfelds des ersten Sensorsystems zu verbessern.

Gemäß einem Aspekt wird vorgeschlagen, dass der Eingangstensor des neuronalen Netzwerks einen Lenkwinkel einer mobilen Plattform und/oder geographische Kartendaten und/oder einen geplanten Routenverlauf und/oder eine Kategorie einer Straße und/oder Wetterbedingungen und/oder eine aktuelle Aufgabe eines autonomen Systems und/oder eine Liste von Objekten und/oder Bereiche, die genauer vermessen werden sollen, aufweist.

Dabei können Beispiele für eine aktuelle Aufgabe eines autonomen Systems sein: eine Fahraufgabe, wie beispielsweise ein Einparken und/oder einem Hindernis ausweichen, etc.

Es wird ein Verfahren zum Trainieren eines neuronalen Netzwerks, zum Generieren eines Steuersignals für ein zweites Sensorsystem vorgeschlagen, das die folgenden Schritte aufweist: In einem Schritt wird ein Eingangstensor für das neuronale Netzwerk mit einer zeitlichen Sequenz von Daten eines ersten Sensorsystems zur Erfassung eines Umfelds des ersten Sensorsystems bereitgestellt, wobei der Eingangstensor des neuronalen Netzwerks Daten eines zweiten Sensorsystems aus einem, einem aktuellen Zeitschritt vorhergehenden, Zeitschritt aufweist. In einem weiteren Schritt wird zumindest ein Objekt der Umgebung des ersten Sensorsystems mittels des neuronalen Netzwerks und dem Eingangstensor generiert. In einem weiteren Schritt wird ein Steuersignal mittels des neuronalen Netzwerks und dem Eingangstensor generiert. In einem weiteren Schritt wird das generierte zumindest eine Objekt mit zumindest einem entsprechend zugeordneten Referenz-Objekt verglichen. In einem weiteren Schritt werden Daten eines zweiten Sensorsystems basierend auf dem Steuersignal für einen nächsten Zeitschritt generiert. In einem weiteren Schritt wird das neuronale Netzwerk adaptiert, um bei der Bestimmung des Objektes der Umgebung eine Abweichung von dem jeweiligen Referenz-Objekt zu minimieren.

Für das Verfahren zum Trainieren eines neuronalen Netzwerkes kann das neuronale Netz eingerichtet sein, Zeitreihen von Daten zu verarbeiten und/oder einen zeitabhängigen Zustand des neuronalen Netzwerks zu charakterisieren. Alternativ oder zusätzlich kann das neuronale Netz für das Verfahren zum Trainieren ein rekurrentes neuronales Netz sein.

Referenz-Objekte sind Objekte, die insbesondere speziell für das Training eines neuronalen Netzwerks zusammen mit den entsprechenden Eingangsdaten für das neuronale Netzwerk, generiert wurden und die entsprechend gelabelt sind.

Gemäß einem Aspekt wird vorgeschlagen, dass für das Trainieren des neuronalen Netzwerkes das zumindest eine Objekt und das entsprechend zugeordnete Referenz-Objekt jeweils eine Objektliste mit zumindest einem Objekt des Umfelds des ersten Sensorsystems ist und/oder das zumindest eine Objekt und das entsprechend zugeordnete Referenz-Objekt jeweils eine hochaufgelöste Repräsentation der Umgebung des ersten Sensorsystems ist. Eine solche hochaufgelöste Repräsentation der Umgebung kann beispielsweise ein optisch generiertes Bild der Umgebung und/oder eine Repräsentation sein, die mittels eines LIDAR-Systems generiert wurde.

Gemäß einem Aspekt wird vorgeschlagen, dass zum Trainieren des neuronalen Netzwerkes das zumindest eine Objekt der Objektliste mittels eines Objektdetektors generiert wird.

Mit anderen Worten kann das Trainieren des neuronalen Netzes und insbesondere des rekurrenten neuronalen Netzes mit einem separaten Objektdetektor durchgeführt werden, indem das neuronale Netzwerk trainiert wird das Steuersignal zu generieren und das zumindest eine Objekt, beispielsweise einer Objektliste, von dem Objektdetektor, beispielsweise basierend auf den Daten des ersten Sensorsystems, generiert wird. Durch das Generieren des zumindest einen Objektes ermöglicht der Objektdetektor das notwendige Feedback für das Erlernen des Steuersignals durch das neuronale Netzwerk, wobei der Objektdetektor selbst entweder unverändert bleiben kann oder selbst in das Trainieren des neuronalen Netzwerks einbezogen werden kann.

Gemäß einem Aspekt wird vorgeschlagen, dass zum Trainieren des neuronalen Netzwerks die zeitliche Sequenz von Daten des ersten Sensorsystems Daten eines realen ersten Sensorsystems oder simulierte Daten für das erste Sensorsystem sind.

Für das Training des neuronalen Netzwerks und insbesondere des rekurrenten neuronalen Netzwerk Trainings mit annotierten Daten sind insbesondere Daten für das zweite Sensorsystem bereitzustellen, da diese Daten abhängig von dem Steuersignal von dem zweiten Sensorsystem generiert werden. Das zweite Sensorsystem liefert somit Daten, die maßgeblich von seiner Ansteuerung abhängen. Daher ist es nicht möglich Daten für das zweite Sensorsystem zu sammeln, die anschließend in unveränderter Form für das Training eines neuronalen Netzwerks verwendet werden können.

Des Weiteren müssen die Sensordaten für das erste und das zweite Sensorsystem annotiert sein. Wie in der Objekterkennung üblich, ist jedes relevante Objekt durch eine begrenzende Box und weiteren Attributen, wie beispielsweise ein Objekttyp und/oder eine Geschwindigkeit, etc., annotiert.

Das neuronale Netzwerk wird beim Trainieren mittels einer Verlustfunktion (loss function), die das Optimierungsziel beschreibt, adaptiert. Eine solche Verlustfunktion kann zumindest zwei Teile aufweisen. Ein erster Teil kann eine gängige Verlustfunktion (Multi-task loss) aus dem Bereich der Objekterkennung sein, die einen Regressions- und Klassifikationsteil aufweist.

Bei dem Adaptieren des neuronalen Netzwerks können beispielsweise Objekte mit annotierten Daten (ground-truth) verglichen werden. Ein zweiter Teil der

Verlustfunktion kann basierend auf dem Steuersignale weitere Optimierungsziele formulieren. Ein Beispiele hierfür ist die Minimierung der Anzahl der Datenpunkte eines LIDAR-Systems, um beispielsweise eine Kostenreduktion für das jeweilige Sensorsystem zu erreichen.

Das neuronale Netzwerk kann mittels Backpropagation adaptiert und trainiert werden. Durch die Anwendung der beschriebenen Verlustfunktion lernt das neuronale Netzwerk beim Trainieren beispielsweise relevante Objekte zu erkennen. Da das Steuersignal für das zweite Sensorsystem einen großen Einfluss darauf haben kann, wie gut Objekte erkannt werden können, wird das neuronale Netzwerk das Steuersignal so verändern, dass die Objekte bestmöglich erkannt werden.

Über die beschriebenen Verfahren zum Trainieren des neuronalen Netzwerks hinaus können für das Training weitere bekannte Verfahren aus dem Gebiet des maschinellen Lernens angewendet werden.

Einige dieser Methoden sind:
· Tiefes Lernen (deep learning)
· Bestärkendes Lernen (reinforcement learning)
· Aktives Lernen (active learning)
· Unüberwachtes/Teilüberwachtes Lernen (unsupervised/semi-supervised learning)

Gemäß einem Aspekt wird vorgeschlagen, dass für das Trainieren des neuronalen Netzwerks die Daten des zweiten Sensorsystems mittels eines hochaufgelösten Sensorsystems generiert werden und/oder die Daten des zweiten Sensorsystems mittels eines Simulationsprogramms zur Simulation des zweiten Sensorsystems generiert werden und/oder die Daten des zweiten Sensorsystems mit dem zweiten Sensorsystem im Umfeld des ersten Sensorsystems generiert werden.

Mit anderen Worten können für das Training des neuronalen Netzwerks sowohl die Daten des ersten Sensorsystems als auch die Daten des zweiten Sensorsystems mittels eines Simulationsprogramms generiert werden. Alternativ oder zusätzlich können die Daten des zweiten Sensorsystems für das Trainieren des neuronalen Netzwerks mit Daten eines hochaufgelösten Sensorsystems generiert werden, indem von Daten eines hochaufgelösten Sensorsystems abhängig von dem Steuersignal Daten generiert werden, die einem zweiten Sensorsystem entsprechen. Beispielsweise könnten aufgrund des Steuersignals aus den Daten eines hochaufgelösten Sensorsystems die Daten selektiert werden, die zumindest einem Teilbereich des Umfeldes entsprechen. Alternativ oder zusätzlich könnten aus den Daten des hochaufgelösten Sensorsystems abhängig von dem Steuersignal für das Training des neuronalen Netzwerks Daten selektiert werden, die eine geringere Auflösung aufweisen. Der hochaufgelöste Sensor würde entsprechend diesem Aspekt verwendet werden um hochaufgelöste Daten zu generieren und zu speichern, die für das Training entsprechend dem Steuersignal selektiert werden, um Daten eines zweiten Sensorsystems zu simulieren.

Alternativ oder zusätzlich kann das Trainieren des neuronalen Netzwerks mit Daten aus Sensor-Messungen der realen Welt stattfinden, indem direkt Daten des zweiten Sensorsystems verwendet werden. Mittels eines Referenzsystems könnten zeitgleich für das Training benötigte Referenzdaten, mit annotierten Objekten und/oder hochaufgelöste Sensordaten, generiert werden.

Das neuronale Netzwerk kann auch ohne annotierte Daten trainiert werden indem als minimierende Zielfunktion ein Rekonstruktionsverlust verwendet wird. Damit ist es möglich das Steuersignal für das zweite Sensorsystem zu lernen, da ein solcher Rekonstruktionsverlust aus informationstheoretischer Sicht die wertvollsten Informationen beinhaltet. Beispielsweise kann so gelernt werden, dass ein Gebäude, das bereits gemessen wurde im nächsten Zeitschritt nicht nochmals gemessen werden muss, da es sich nicht bewegen oder verändern wird. Ein Fußgänger jedoch in jedem Zeitschritt genauer vermessen wird, da sich dieser bewegen kann und sein Erscheinungsbild ändert, was nicht einfach vorherzusagen ist.

Dazu wird eine Struktur des neuronalen Netzwerks angepasst, um am Ausgang statt einer Objektliste hochaufgelöste Sensordaten herauszugeben. Die Verlustfunktion kann das Ausgangssignal des neuronalen Netzwerks mit hochaufgelösten Sensordaten für das zweite Sensorsystem, beispielsweise aus einer Simulation, vergleichen und, mittels einer Metrik, bestimmen, wie gut die Daten übereinstimmen. Als Metriken kann unter anderem die Summe der absoluten Differenzen verwendet werden. Auf diese Weise lernt das neuronale Netzwerk das Steuersignal derart auszulegen, dass aus vergangenen Daten und den Sensordaten des ersten Sensorsystems und/oder des zweiten Sensorsystems mit geringer Auflösung hochaufgelöste Sensordaten generiert werden können.

Gemäß einem Aspekt wird vorgeschlagen, dass für das Trainieren des neuronalen Netzwerks das neuronale Netzwerk eingerichtet ist, Zeitreihen von Daten zu verarbeiten und/oder einen zeitabhängigen Zustand des neuronalen Netzwerks zu charakterisieren und/oder das neuronale Netzwerk ein rekurrentes neuronales Netz ist.

Es wird ein neuronales Netzwerk vorgeschlagen, das entsprechend einem der oben beschriebenen Verfahren zum Trainieren des neuronalen Netzwerks eingerichtet und trainiert ist.

Es wird ein Verfahren, entsprechend einem der oben beschriebenen Verfahren zur Erfassung eines Umfelds eines ersten Sensorsystems vorgeschlagen, dass ein neuronales Netzwerk aufweist das entsprechend einem der oben beschriebenen Verfahren zum Trainieren des neuronalen Netzwerks eingerichtet und trainiert ist.

Es wird eine Erfassungs-Vorrichtung vorgeschlagen, die eingerichtet ist, eines der oben beschriebenen Verfahren zur Erfassung eines Umfeldes eines ersten Sensorsystems durchzuführen.

Es wird eine mobile Plattform vorgeschlagen, die zumindest teilautomatisiert ist, und eine der oben beschriebenen Erfassungs-Vorrichtungen zur Erfassung der Umgebung der mobilen Plattform aufweist und/oder wobei die mobile Plattform ein erstes Sensorsystem und ein zweites Sensorsystem aufweist, wie es oben beschrieben ist.

Dadurch kann die Erfassung des Umfelds der mobilen Plattform mit geringerem wirtschaftlichen Aufwand mit hoher Qualität der Erfassung erfolgen.

Unter einer mobilen Plattform kann ein zumindest teilweise automatisiertes System verstanden werden, welches mobil ist, und/oder ein Fahrerassistenzsystem. Ein Beispiel kann ein zumindest teilweise automatisiertes Fahrzeug bzw. ein Fahrzeug mit einem Fahrerassistenzsystem sein. Das heißt, in diesem Zusammenhang beinhaltet ein zumindest teilweise automatisiertes System eine mobile Plattform in Bezug auf eine zumindest teilweise automatisierte Funktionalität, aber eine mobile Plattform beinhaltet auch Fahrzeuge und andere mobile Maschinen einschließlich Fahrerassistenzsysteme. Weitere Beispiele für mobile Plattformen können Fahrerassistenzsysteme mit mehreren Sensoren, mobile Multisensor-Roboter wie z.B. Roboterstaubsauger oder Rasenmäher sein.

Das beschriebene Verfahren zur Erfassung eines Umfelds eines ersten Sensorsystems kann für mobile Plattformen und/oder auch für Multisensor-Überwachungssysteme und/oder eine Fertigungsmaschine und/oder einen persönlichen Assistenten und/oder ein Zugangskontrollsystem verwendet werden.

Jedes dieser Systeme kann ein vollständig oder teilweise automatisiertes System sein.

Es wird ein Computerprogramm vorgeschlagen, dass Befehle aufweist, die bei der Ausführung des Computerprogramms durch einen Computer diesen veranlassen, eines der oben beschriebenen Verfahren auszuführen. Mittels eines solchen Computerprogramms können die oben beschriebenen Verfahren auf eine einfache Art und Weise zum Beispiel einer mobilen Plattform verfügbar gemacht werden.

Es wird ein maschinenlesbares Speichermedium vorgeschlagen, auf dem das oben beschriebene Computerprogramm gespeichert ist. Mittels eines solchen maschinenlesbaren Speichermediums ist das oben beschriebene Computerprogrammprodukt transportabel.

Es wird eine Verwendung des Steuersignals wie es oben beschrieben wird für die Ansteuerung eines externen Sensorsystems vorgeschlagen. Somit kann das Steuersignal alternativ oder zusätzlich für das zweite Sensorsystem und/oder für ein weiteres externes Sensorsystem zur Steuerung verwendet werden.

Es wird eine Verwendung eines der oben beschriebenen Verfahren zur Erfassung eines Umfelds eines ersten Sensorsystems zur Steuerung einer zumindest teilautomatisierten mobilen Plattform vorgeschlagen.

Es wird ein Verfahren vorgeschlagen, bei dem, basierend auf einem, gemäß einem der oben beschriebenen Verfahren, erfassten Umfeld eines ersten Sensorsystems, ein Steuersignal zur Ansteuerung eines zumindest teilautomatisierten Fahrzeugs generiert wird; und/oder basierend auf dem erfassten Umfeld des ersten Sensorsystems ein Warnsignal zur Warnung eines Fahrzeuginsassen generiert wird.

### Ausführungsbeispiel

Ein Ausführungsbeispiel der Erfindung wird mit Bezug auf die Figuren 1 bis 8 dargestellt und im Folgenden näher erläutert. Es zeigen:
- Figur 1: eine mobile Plattform mit Sensoren unterschiedlicher Modalität mit zumindest einem steuerbaren Sensor;
- Figur 2a,b: ein rekurrentes neuronales Netz;
- Figur 3: hervorgehobene Bereiche unterschiedlicher Verkehrssituationen;
- Figur 4: Verfahrensschritte zur Erfassung eines Umfelds;
- Figur 5: eine Erfassungs-Vorrichtung mit Datenflüssen;
- Figur 6: Datenflüsse beim Training einer Erfassungs-Vorrichtung;
- Figur 7: ein modifiziertes Set-up zum Training einer Erfassung-Vorrichtung; und
- Figur 8: mögliche Applikationen des Verfahrens.

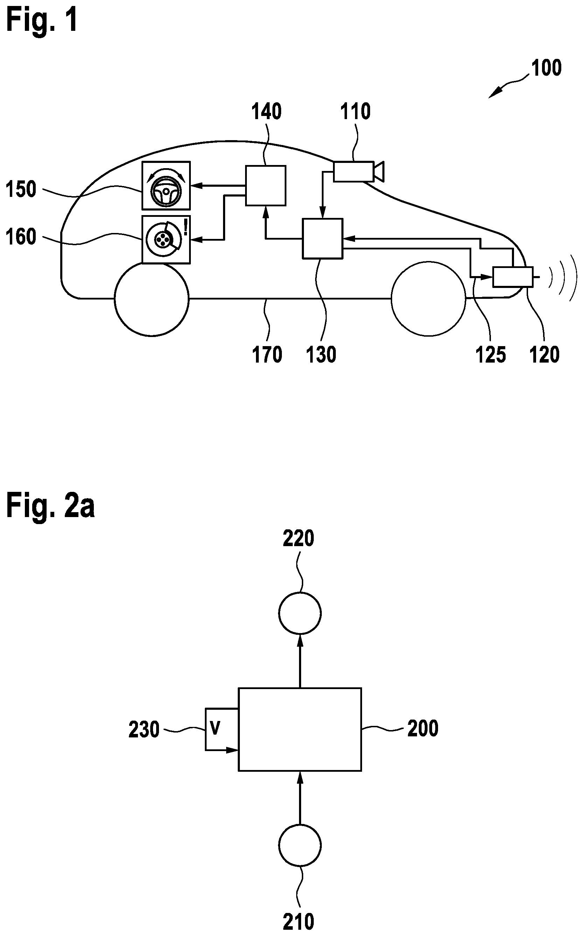

Die Figur 1 zeigt schematisch ein Fahrzeug 170, das ein System 100 zur Erfassung eines Umfelds einer mobilen Plattform aufweist. Das Fahrzeug 170 weist eine Video-Kamera 110 auf, die einem ersten Sensor-System entspricht, und die mit einer Erfassungs-Vorrichtung 130 signalmäßig gekoppelt ist, um von ihr generierte Bilder der Erfassung-Vorrichtung 130 bereitzustellen.

Ein steuerbarer Radar-Sensor 120 des Fahrzeugs 170, der einem zweiten Sensorsystem entspricht, ist mit der Erfassungs-Vorrichtung 130 signalmäßig bidirektional gekoppelt und stellt seine Signale der Erfassungs-Vorrichtung 130 bereit. Dabei kann der steuerbare Radar-Sensor 120 in Bezug auf seine Wahrnehmung des Umfelds, mit einem generierten Steuersignal, gesteuert werden.

Mit einem solchen System ist mittels eines Steuersignals eine gezielte Ansteuerung eines aktiven zweiten Sensorsystems 120, wie z.B. Radar- oder Lidar-Sensor, möglich, sodass eine gerichtete Erfassung des Umfelds erfolgen kann. Dabei kann das Steuersignal mittels des Verbindungssignals 125, das Signale vom Steuergerät 130 zum zweiten Sensorsystem 120 überträgt, an das zweite Sensorsystem 120 übertragen werden.

Die Erfassungs-Vorrichtung 130 ist eingerichtet eines der oben beschriebenen Verfahren zur Erfassung des Umfelds mit den Daten der Video-Kamera 110 und das Radar-Sensors auszuführen.

Weiterhin kann die Erfassungs-Vorrichtung mit einem Steuergerät 140 gekoppelt sein, das beispielsweise mit einer Bremse 160 oder einem Lenksystem 150 gekoppelt ist. Dadurch kann das Steuergerät 140 abhängig von Signalen von der Erfassungs-Vorrichtung 130 beispielsweise eine automatische Notbremsung steuern oder mittels des Lenksystems ein automatisches Ausweichmanöver regeln.

Die Figur 2a skizziert eine Struktur eines rekurrenten neuronalen Netzes (RNN) 200 mit einem Eingangsanschluss 210 an dem der Eingangstensor bereitgestellt werden kann und einem Ausgang 220, an dem beispielsweise ein Steuersignal und/oder eine Objektliste, wie sie oben beschrieben wurde, bereitgestellt werden kann. Dabei wird mit der Zustandsvariablen V 230 und dem Pfeil die rekurrente Struktur des neuronalen Netzes angedeutet.

Die Figur 2b skizziert die Struktur des rekurrenten neuronalen Netzes 200 in dem die rekurrente Struktur mit einem "ausgerollten" rekurrenten neuronalen Netz dargestellt ist. An den Eingangsanschlüssen 210 a bis c können beispielsweise zu den Zeitschritten t-1, t, t+1 zeitliche Sequenzen von Daten des ersten Sensorsystems bereitgestellt werden aus denen entsprechende Ausgangssignale 220a bis 220c durch das neuronale Netz generiert werden. Der jeweilige vorherige Zustand des rekurrenten neuronalen Netzes 200 kann jeweils über einen Zustandsvektor V t-₂, V ₜ₋₁, Vₜ, Vₜ₊₁ zur Charakterisierung des aktuellen Zustands des rekurrenten neuronalen Netzes 200 verwendet werden. Dabei bleibt das neuronale Netz selbst im Verfahren zur Erfassung eines Umfeldes eines ersten Sensorsystems unverändert.

Mit anderen Worten werden zum Zeitpunkt t Eingangsdaten xt und der Zustandsvektor eines vorherigen Zeitschritts Vₜ₋₁ vom neuronalen Netzwerk 200 verarbeitet. Dabei wird die Ausgabe 220a bis 220c und ein neuer Zustand Vt generiert. Der Zustand Vₜ₊₁ dient im nächsten Zeitschritt t+1 wiederum als eine Eingangsgröße für das neuronale Netzwerk.

Die Figur 3 a bis d skizziert vier verschiedene Straßenszenen bzw. Verkehrssituationen, in denen mit den schraffierten Feldern Teilbereiche hervorgehoben werden, die beispielsweise mit dem zweiten Sensorsystem mittels des Steuersignals erfasst werden können, um die Erfassung des Umfelds des ersten Sensorsystems zu verbessern, wie schon weiter oben erläutert wurde.

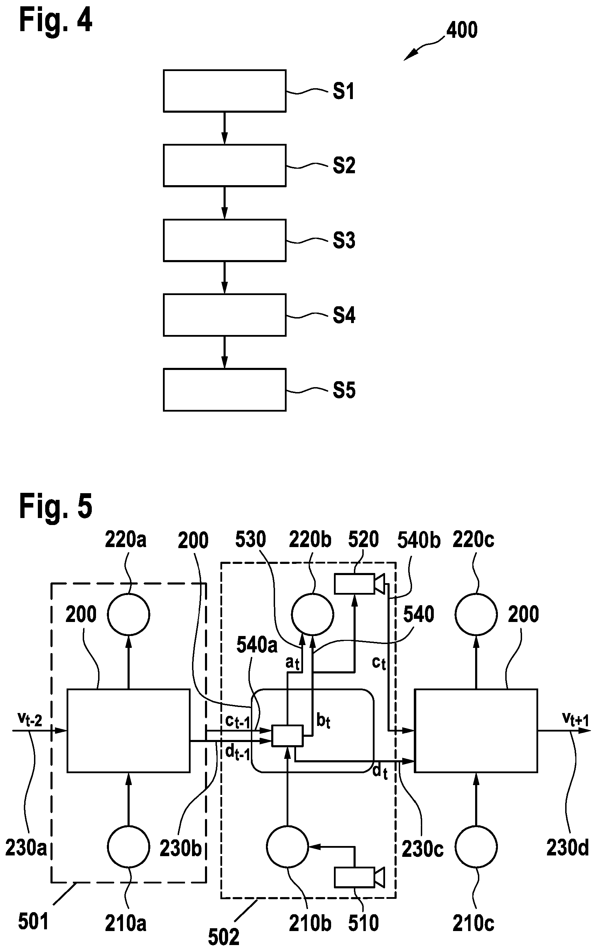

Die Figur 4 skizziert Verfahrensschritte zur Erfassung des Umfelds des ersten Sensorsystems 510:
In einem Schritt S1, der vor einem aktuellen Zeitschritt liegt, werden von einem zweiten Sensorsystem 520 Daten generiert, die für ein Generieren des Eingangstensors bereitgestellt werden.

In einem weiteren Schritt S2 wird in einem aktuellen Zeitschritt eine zeitliche Sequenz von Daten des ersten Sensorsystems 510 zur Erfassung des Umfelds bereitgestellt, die beispielsweise einen großen Bereich des Umfelds umfassen.

In einem weiteren Schritt S3 wird ein Eingangstensor mit der zeitlichen Sequenz von Daten des ersten Sensorsystems 510 und den bereitgestellten Daten des zweiten Sensorsystems 520 für ein trainiertes neuronales Netz generiert, wobei das neuronale Netz eingerichtet und trainiert wurde, basierend auf dem Eingangstensor zumindest einen Teilbereich des Umfelds zur Verbesserung der Erfassung des Umfelds mittels eines zweiten Sensorsystems zu identifizieren.

In einem weiteren Schritt S4 wird ein Steuersignal 540 für das zweite Sensorsystem 520 mittels eines Ausgangssignals des trainierten neuronalen Netzwerks 200 generiert, um in dem zumindest einen Teilbereich die Erfassung des Umfelds zu verbessern. Dazu kann das neuronale Netzwerk 200 intern Merkmale, wie beispielsweise Verdeckungen und/oder einen Straßenverlauf und/oder Objekte extrahieren und gegebenenfalls auch als Objektliste 530 ausgeben. Diese extrahierten Merkmale können intern in dem neuronalen Netzwerk 200 verwendet werden, um Bereiche, wie beispielsweise Winkel und/oder Abstände zu bestimmen, die genauer vermessen werden sollen. In diesen Bereichen besteht eine hohe Wahrscheinlichkeit, dass neue Objekte sichtbar werden oder bereits erkannte Objekte genauer erfasst werden können. Somit kann das neuronale Netzwerk 200 abhängig von diesen Bereichen das entsprechende Steuersignal für das zweite Sensorsystem 520 generieren.

In einem weiteren Schritt S5 steuert das Steuersignal das zweite Sensorsystem 520 den Teilbereich der Umgebung zu erfassen, um die Erfassung des Umfelds des ersten Sensorsystems 510 zu verbessern. Mittels dieses Steuersignals 540 kann das zweite Sensorsystem beispielsweise seinen Erfassungsbereich einschränken. Das zweite Sensorsystem 520 kann dann entsprechend für solche Bereiche Daten generieren, die eine erhöhte Genauigkeit aufweisen und mit denen dann das Umfeld des ersten Sensorsystems verbessert erfasst werden kann.

Die Figur 5 skizziert Datenflüsse im Betrieb einer Erfassung-Vorrichtung zur Erfassung eines Umfelds eines ersten Sensorsystems 510, mit drei nebeneinander angeordneten Darstellungen der Erfassung-Vorrichtung, wobei ein vorhergehender Zeitschritt ganz links 501 angeordnet ist, ein aktueller Zeitschritt in der Mitte 502 angeordnet ist und ein zukünftiger Zeitschritt rechts angeordnet ist. Nur in der mittleren Darstellung der Erfassung-Vorrichtung sind die jeweiligen Details der Erfassung-Vorrichtung dargestellt. Die Erfassung-Vorrichtung weist dabei ein trainiertes rekurrentes neuronales Netzwerk 200 auf. Das erste Sensorsystem 510 kann beispielsweise ein passiver Video-Sensor und/oder ein LIDAR-Sensorsystem sein und das zweite Sensorsystem 520 kann ein aktiv steuerbares LIDAR-Sensorsystem sein. Diese Sensorsysteme liefern periodisch Sensordaten.

Daten des ersten Sensorsystems 510 sollen dabei genutzt werden können, um das zweite Sensorsystem 520 so zu steuern, dass geeignete Bereiche im Umfeld des ersten Sensorsystems 510 genauer erfasst werden. Dadurch können beispielsweise relevante Verkehrsteilnehmer früher und zuverlässiger erkannt werden und/oder eine Anzahl von Geisterobjekten reduziert werden.

Zum Zeitpunkt t werden dem mit Deep Learning trainierten neuronalen Netzwerk 200 Eingangssignale 210b mit Daten des ersten Sensorsystems 510 bereitgestellt. Entsprechendes gilt für einen vorhergehenden Zeitpunkt t-1 mit den Eingangsdaten 210a bzw. für den darauffolgenden Zeitpunkt t+1 mit den Eingangsdaten 210c.

Zusätzlich werden dem trainierten neuronalen Netzwerk 200 Sensordaten cₜ₋₁ 540a vom zweiten Sensorsystem 520 von einem vorherigen Zeitpunkt t-1 und ein Zustandsvektor des neuronalen Netzwerks dₜ₋₁ 230b von einem vorherigen Zeitpunkt t-1 bereitgestellt und damit ein Eingangstensor generiert.

Die Zustandsvektor dₜ₋₁ 230b stellt einen Zustandsvektor des neuronalen Netzes vom Zeitpunkt t-1 dar, mit dessen Hilfe das neuronale Netzwerk 200 Informationen über Zeitschritte hinweg speichern kann.

Darüber hinaus kann der Eingangstensor noch weitere Daten 210b aufweisen, wie beispielsweise eine Fahrzeuggeschwindigkeit und/oder einen Fahrzeug-Linkwinkel, etc.

Das neuronale Netzwerk 200 generiert auf Basis der beschriebenen Eingangsdaten und seiner gelernten Logik ein Steuersignal bt 540 für das zweite Sensorsystem 520 und eine Liste von detektierten Objekten at 530, wie zum Beispiel eine Liste erkannter relevanter Verkehrsteilnehmer, die mit ihrer Position und/oder Abmessungen und/oder Orientierung und/oder Objekttyp charakterisiert sind.

Hierfür hat das neuronale Netzwerk 200 Informationen der Sensorsysteme 510, 520 über vorherige Zeitschritte hinweg aggregiert. Die besonders akkurate Schätzung, mittels der Objektliste at der relevanten Verkehrsteilnehmer, kann anschließend zur Steuerung einer mobilen Plattform, wie beispielsweise eines Fahrzeugs, verwendet werden.

Das Signal bₜ kann Angaben wie Winkel- und Entfernungsbereiche aufweisen, die das aktive steuerbare zweite Sensorsystem messen soll.

Mittels des Steuersignals bt 540 wird eine Erfassung des Umfelds des ersten Sensorsystems 510 mittels des zweiten Sensorsystems 520 in einem nachfolgenden zukünftigen Zeitschritt t+1 gesteuert. Dazu können für den nächsten Zeitschritt t+1 Daten ct 540b des zweiten Sensorsystems 520 und der Zustandsvektor dt 230c des neuronalen Netzwerks 200 zum Zeitpunkt t bereitgestellt werden.

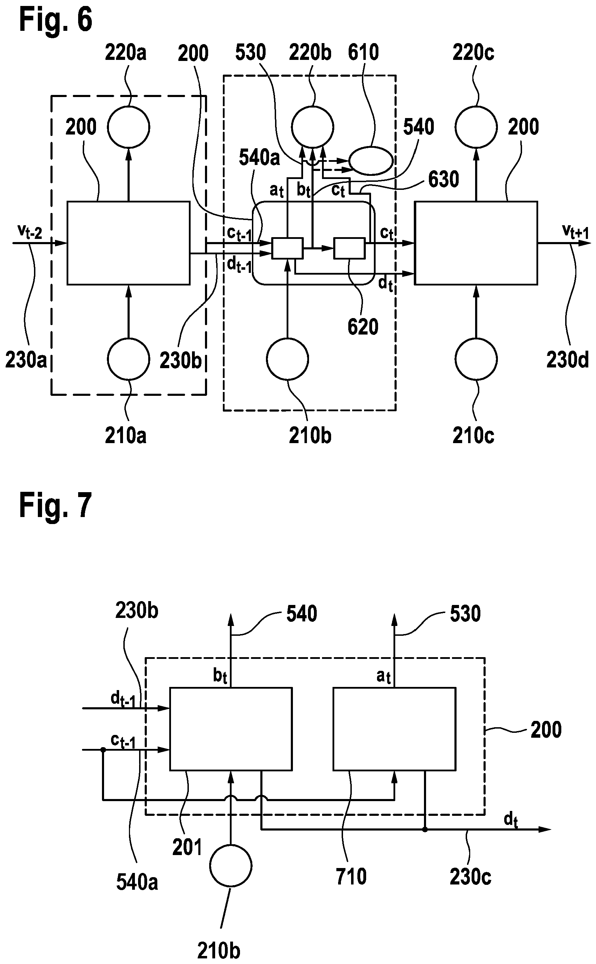

Die Figur 6 skizziert Datenflüsse beim Training einer Erfassungs-Vorrichtung zur Erfassung eines Umfeldes eines ersten Sensorsystems.

Zusätzlich zu den Datenflüssen, die entsprechend der in Figur 5 beschriebenen Erfassung-Vorrichtung zur Erfassung eines Umfelds eines ersten Sensorsystems 510 bereits beschrieben wurden, werden in der Figur 6 die Datenflüsse von der Objektliste at 530 und dem Steuersignal bt 540 zur Verlustfunktion 610 dargestellt, um mittels Referenz-Objekten, die hier nicht dargestellt sind, einen Vergleich des zumindest einen generierten Objektes durch das neuronale Netzwerk 200 mit einem entsprechend zugeordneten Referenz-Objekt, wie oben beschrieben, durchführen zu können.

Um Daten des zweiten Sensorsystems 520 der Figur 5 abhängig von dem Steuersignal bt 540 zu generieren, ist in der Figur 6 ein Simulationsprogramm 620 anstelle eines zweiten Sensorsystems 520 vorgesehen. Die Verfahrensschritte des Ablaufs des Trainierens des neuronalen Netzwerks 200 sind schon weiter oben beschrieben worden.

Die Figur 7 skizziert die Datenflüsse mit einem modifizierten Set-up des neuronalen Netzwerks beim Training eines neuronalen Netzes 200 zur Erfassung des Umfelds des ersten Sensorsystems.

Bei diesem Training des neuronalen Netzwerks 200 wird das neuronale Netzwerk 200 unter Zuhilfenahme eines separaten Objektdetektors 710 trainiert, ein Steuersignal für das zweite Sensorsystem zu generieren.

Dabei erhält sowohl das neuronale Netz 201 als auch der Objektdetektor 710 Sensordaten cₜ₋₁ 540a vom zweiten Sensorsystem 520 von einem vorherigen Zeitpunkt t-1. Das neuronale Netz 200 lernt so das Steuersignal bt 540 zu generieren und der Detektor 710 generiert das zumindest eine Objekt der Objektliste at 530 basierend auf den Daten des zweiten Sensorsystems 520. Der Detektor 710 stellt somit das Feed-back für das Trainieren des neuronalen Netzes zum Generieren des Steuersignals bt 540 durch die Bereitstellung des zumindest einen Objekts der Objektliste at und kann selbst unverändert bestehen bleiben oder ebenfalls optimiert werden. Der jeweilige Zustand des Objektdetektors 710, der beispielsweise durch eine Objektliste at 530 charakterisiert ist, kann im nächsten Zeitschritt t+1 als Eingangsgröße für das neuronale Netz 201 entsprechend dem Zustandsvektor dt 230c verwendet werden. Alternativ oder zusätzlich kann das Eingangssignal 210b für das neuronale Netzwerk 201 und den Objektdetektor 710 als Eingangsgröße bereitgestellt werden. Mit anderen Worten wird das neuronale Netz 200 in ein neuronales Netz 201 zur Generierung des Steuersignals bt 540 und den Objektdetektor 710 aufgeteilt.

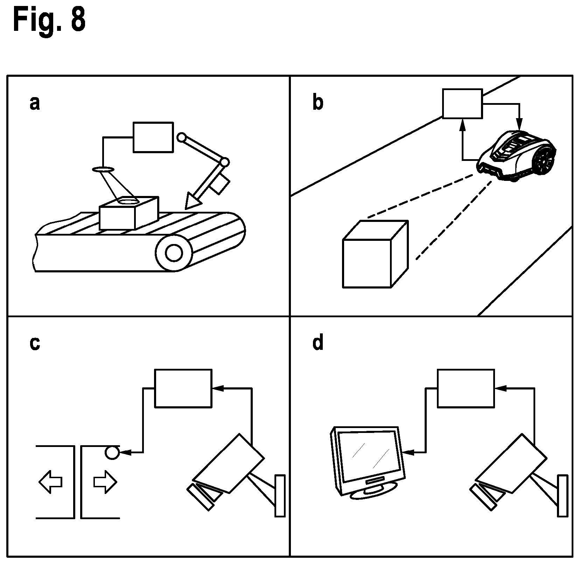

Die Figur 8a bis d skizziert weitere mögliche Anwendungsgebiete eines der beschriebenen Verfahren.

Die Figur 8a skizziert die Anwendung eines der beschriebenen Verfahren bei automatisierten Prüfsystemen, z.B. zur Inspektion von Bauteilen mit Thermografie, Wirbelstrom und einer konventionellen Optik, um fehlerhafte Bauteile sicher auszusortieren.

Die Figur 8b skizziert die Anwendung eines der beschriebenen Verfahren für einen automatisierten Rasenmäher, z.B. zur sicheren Bestimmung bzw. Klassifikation von Objekten dabei insbesondere die Unterscheidung eines Hindernisses von einem Nicht-Hindernis.

Die Figur 8c skizziert die Anwendung eines der beschriebenen Verfahren für eine automatische Zugangskontrolle, z.B. zur optischen und akustischen PersonenIdentifikation und automatischen Türöffnung.

Die Figur 8d skizziert die Anwendung eines der beschriebenen Verfahren zur Überwachung von Plätzen oder Gebäuden, z.B. zur Prüfung von gefährlichen Gütern, beispielsweise mit einer Kamera und einem LIDAR-Sensor.

## Patentansprüche

1. Verfahren zur Erfassung eines Umfelds eines ersten Sensorsystems (510), mit den Schritten:
Bereitstellen einer zeitlichen Sequenz von Daten des ersten Sensorsystems (510) zur Erfassung des Umfelds;
Generieren eines Eingangstensors mit der zeitlichen Sequenz von Daten des ersten Sensorsystems (510) für ein trainiertes neuronales Netz (200), wobei das neuronale Netz (200) eingerichtet und trainiert wurde, basierend auf dem Eingangstensor zumindest einen Teilbereich des Umfelds zur Verbesserung der Erfassung des Umfelds mittels eines zweiten Sensorsystems (520) zu identifizieren;
Generieren eines Steuersignals (540), das für das zweite Sensorsystem (520) bereitgestellt wird, mittels eines Ausgangssignals des trainierten neuronalen Netzwerks, um in dem zumindest einen Teilbereich die Erfassung des Umfelds mittels des zweiten Sensorsystems (520) zu verbessern.

2. Verfahren gemäß Anspruch 1, wobei das neuronale Netz (200) eingerichtet ist, Zeitreihen von Daten zu verarbeiten und/oder einen zeitabhängigen Zustand des neuronalen Netzwerks (200) zu charakterisieren.

3. Verfahren gemäß einem der vorhergehenden Ansprüche, wobei der Eingangstensor des neuronalen Netzwerks (200) Daten des zweiten Sensorsystems (520) aus einem, einem aktuellen Zeitschritt vorhergehenden, Zeitschritt aufweist, um die Erfassung des Umfelds des ersten Sensorsystems (510) zu verbessern.

4. Verfahren gemäß einem der vorhergehenden Ansprüche, wobei das erste Sensorsystem (510) ein passives Sensorsystem und das zweite Sensorsystem (520) ein aktives Sensorsystem ist.

5. Verfahren gemäß einem der vorhergehenden Ansprüche, wobei das erste Sensorsystem (510) das gleiche Sensorsystem wie das zweite Sensorsystem (520) ist; und das Steuersignal von dem Sensorsystem in einem nachfolgenden Zeitschritt für eine verbesserte Erfassung des Umfelds verwendet wird.

6. Verfahren gemäß einem der vorhergehenden Ansprüche, wobei das Steuersignal das zweite Sensorsystem (520) steuert den Teilbereich der Umgebung zu erfassen, um die Erfassung des Umfelds des ersten Sensorsystems (510) zu verbessern.

7. Verfahren zum Trainieren eines neuronalen Netzwerks (200), zum Generieren eines Steuersignals für ein zweites Sensorsystem (520), mit den Schritten:
Bereitstellen eines Eingangstensors für das neuronale Netzwerk (200) mit einer zeitlichen Sequenz von Daten eines ersten Sensorsystems (510) zur Erfassung eines Umfelds des ersten Sensorsystems (510), wobei der Eingangstensor des neuronalen Netzwerks (200) Daten eines zweiten Sensorsystems (520) aus einem, einem aktuellen Zeitschritt vorhergehenden, Zeitschritt aufweist;
Generieren zumindest eines Objektes der Umgebung des ersten Sensorsystems (510) mittels des neuronalen Netzwerks (200) und des Eingangstensors;
Generieren eines Steuersignals (540) mittels des neuronalen Netzwerks (200) und des Eingangstensors;
Vergleichen des generierten zumindest einen Objekts mit zumindest einem entsprechend zugeordneten Referenz-Objekt;
Generieren von Daten eines zweiten Sensorsystems (520) basierend auf dem Steuersignal (540) für einen nächsten Zeitschritt;
und
Adaptieren des neuronalen Netzwerkes (200), um bei der Bestimmung des Objektes der Umgebung eine Abweichung von dem jeweiligen Referenz-Objekt zu minimieren.

8. Verfahren gemäß Anspruch 7, wobei das zumindest eine Objekt (530) und das entsprechend zugeordnete Referenz-Objekt jeweils eine Objektliste mit zumindest einem Objekt des Umfelds des ersten Sensorsystems (510) ist und/oder das zumindest eine Objekt und das entsprechend zugeordnete Referenz-Objekt jeweils eine hochaufgelöste Repräsentation der Umgebung des ersten Sensorsystems (510) ist.

9. Verfahren gemäß Anspruch 7, wobei das zumindest eine Objekt der Objektliste (530) mittels eines Objektdetektors (710) generiert wird.

10. Verfahren gemäß einem der Ansprüche 7 bis 9, wobei die zeitliche Sequenz von Daten des ersten Sensorsystems (510) Daten eines realen ersten Sensorsystems (510) oder simulierte Daten für das erste Sensorsystem (510) sind.

11. Verfahren gemäß einem der Ansprüche 7 bis 10, wobei die Daten des zweiten Sensorsystems (520) mittels eines hochaufgelösten Sensorsystems generiert werden und/oder die Daten des zweiten Sensorsystems (520) mittels eines Simulationsprogramms zur Simulation des zweiten Sensorsystems generiert werden und/oder die Daten des zweiten Sensorsystems (520) mit dem zweiten Sensorsystem (520) im Umfeld des ersten Sensorsystems generiert werden.

12. Verfahren gemäß Anspruch 7 bis 11, wobei das neuronale Netzwerk (200) eingerichtet ist, Zeitreihen von Daten zu verarbeiten und/oder einen zeitabhängigen Zustand des neuronalen Netzwerks (200) zu charakterisieren und/oder das neuronale Netzwerk (200) ein rekurrentes neuronales Netzwerk ist.

13. Neuronales Netzwerk (200), das entsprechend einem der Ansprüche 7 bis 12 eingerichtet und trainiert ist.

14. Verfahren gemäß Anspruch 1 bis 6, mit einem neuronalen Netzwerk (200) entsprechend Anspruch 13.

15. Erfassungs-Vorrichtung, die eingerichtet ist, ein Verfahren nach einem der Ansprüche 1 bis 6 oder 14 durchzuführen.

## Claims

1. Method for detecting an environment of a first sensor system (510), having the steps of:
providing a temporal sequence of data from the first sensor system (510) for detecting the environment;
generating an input tensor with the temporal sequence of data from the first sensor system (510) for a trained neural network (200), wherein the neural network (200) was set up and trained to identify, based on the input tensor, at least one section of the environment for improving the detection of the environment by means of a second sensor system (520);
generating a control signal (540), which is provided for the second sensor system (520), by means of an output signal from the trained neural network, in order to improve the detection of the environment by means of the second sensor system (520) in the at least one section.

2. Method according to Claim 1, wherein the neural network (200) is configured to process time series of data and/or to characterize a time-dependent state of the neural network (200).

3. Method according to one of the preceding claims, wherein the input tensor of the neural network (200) has data from the second sensor system (520) from a time step preceding a current time step in order to improve the detection of the environment of the first sensor system (510).

4. Method according to one of the preceding claims, wherein the first sensor system (510) is a passive sensor system and the second sensor system (520) is an active sensor system.

5. Method according to one of the preceding claims, wherein the first sensor system (510) is the same sensor system as the second sensor system (520); and the control signal from the sensor system is used in a subsequent time step for improved detection of the environment.

6. Method according to one of the preceding claims, wherein the control signal controls the second sensor system (520) to detect the section of the surroundings in order to improve the detection of the environment of the first sensor system (510).

7. Method for training a neural network (200) for generating a control signal for a second sensor system (520), having the steps of:
providing an input tensor for the neural network (200) with a temporal sequence of data from a first sensor system (510) for detecting an environment of the first sensor system (510), wherein the input tensor of the neural network (200) has data from a second sensor system (520) from a time step preceding a current time step;
generating at least one object in the surroundings of the first sensor system (510) by means of the neural network (200) and the input tensor;
generating a control signal (540) by means of the neural network (200) and the input tensor;
comparing the generated at least one object with at least one accordingly assigned reference object;
generating data from a second sensor system (520) based on the control signal (540) for a next time step;
and
adapting the neural network (200) in order to minimize a deviation from the respective reference object when determining the object in the surroundings.

8. Method according to Claim 7, wherein the at least one object (530) and the accordingly assigned reference object are each an object list with at least one object in the environment of the first sensor system (510), and/or the at least one object and the accordingly assigned reference object are each a high-resolution representation of the surroundings of the first sensor system (510).

9. Method according to Claim 7, wherein the at least one object in the object list (530) is generated by means of an object detector (710).

10. Method according to one of Claims 7 to 9, wherein the temporal sequence of data from the first sensor system (510) are data from a real first sensor system (510) or simulated data for the first sensor system (510).

11. Method according to one of Claims 7 to 10, wherein the data from the second sensor system (520) are generated by means of a high-resolution sensor system, and/or the data from the second sensor system (520) are generated by means of a simulation program for simulating the second sensor system, and/or the data from the second sensor system (520) are generated with the second sensor system (520) in the environment of the first sensor system.

12. Method according to Claims 7 to 11, wherein the neural network (200) is configured to process time series of data and/or to characterize a time-dependent state of the neural network (200), and/or the neural network (200) is a recurrent neural network.

13. Neural network (200) which is set up and trained according to one of Claims 7 to 12.

14. Method according to Claims 1 to 6, with a neural network (200) according to Claim 13.

15. Detection device configured to carry out a method according to one of Claims 1 to 6 or 14.

## Revendications

1. Procédé de détection d'un environnement d'un premier système de capteur (510), comprenant les étapes consistant à :
fournir une séquence temporelle de données du premier système de capteur (510) pour détecter l'environnement ;
générer un tenseur d'entrée à l'aide de la séquence temporelle de données du premier système de capteur (510) pour un réseau neuronal entraîné (200), le réseau neuronal (200) ayant été configuré et entraîné pour identifier, sur la base du tenseur d'entrée, au moins une sous-région de l'environnement au moyen d'un second système de capteur (520) afin d'améliorer la détection de l'environnement ;
générer un signal de commande (540) qui est fourni pour le second système de capteur (520) au moyen d'un signal de sortie du réseau neuronal entraîné afin d'améliorer la détection de l'environnement dans ladite au moins une sous-région au moyen du second système de capteur (520).

2. Procédé selon la revendication 1, dans lequel le réseau neuronal (200) est configuré pour traiter des séries temporelles de données et/ou pour caractériser un état, dépendant du temps, du réseau neuronal (200).

3. Procédé selon l'une des revendications précédentes, dans lequel le tenseur d'entrée du réseau neuronal (200) comporte des données du second système de capteur (520) provenant d'une étape temporelle qui précède une étape temporelle actuelle, afin d'améliorer la détection de l'environnement du premier système de capteur (510).

4. Procédé selon l'une des revendications précédentes, dans lequel le premier système de capteur (510) est un système de capteur passif et le second système de capteur (520) est un système de capteur actif.

5. Procédé selon l'une des revendications précédentes, dans lequel le premier système de capteur (510) est un système de capteur identique au second système de capteur (520) ; et le signal de commande est utilisé par le système de capteur lors d'une étape temporelle ultérieure pour une détection améliorée de l'environnement.

6. Procédé selon l'une des revendications précédentes, dans lequel le signal de commande ordonne au second système de capteur (520) de détecter la sous-région de l'environnement afin d'améliorer la détection de l'environnement du premier système de capteur (510).

7. Procédé d'entraînement d'un réseau neuronal (200) afin de"générer un signal de commande destiné à un second système de capteur (520), comprenant les étapes consistant à :
fournir un tenseur d'entrée destiné au réseau neuronal (200) à l'aide d'une séquence temporelle de données d'un premier système de capteur (510) afin de détecter un environnement du premier système de capteur (510), le tenseur d'entrée du réseau neuronal (200) comportant des données d'un second système de capteur (520) provenant d'une étape temporelle précédant une étape temporelle actuelle ;
générer au moins un objet de l'environnement du premier système de capteur (510) au moyen du réseau neuronal (200) et du tenseur d'entrée ;
générer un signal de commande (540) au moyen du réseau neuronal (200) et du tenseur d'entrée ;
comparer ledit au moins un objet généré audit au moins un objet de référence associé de manière correspondante ;
générer des données d'un second système de capteur (520) sur la base du signal de commande (540) pour une étape temporelle suivante ;
et
adapter le réseau neuronal (200) afin de minimiser un écart par rapport à l'objet de référence respectif lors de la détermination de l'objet de l'environnement.

8. Procédé selon la revendication 7, dans lequel ledit au moins un objet (530) et l'objet de référence correspondant sont respectivement une liste d'objets comprenant au moins un objet de l'environnement du premier système de capteur (510) et/ou ledit au moins un objet et l'objet de référence correspondant sont respectivement une représentation à haute résolution de l'environnement du premier système de capteur (510).

9. Procédé selon la revendication 7, dans lequel ledit au moins un objet de la liste d'objets (530) est généré au moyen d'un détecteur d'objets (710).

10. Procédé selon l'une des revendications 7 à 9, dans lequel la séquence temporelle de données du premier système de capteur (510) est constituée de données d'un système de capteur réel (510) ou de données simulées pour le premier système de capteur (510).

11. Procédé selon l'une des revendications 7 à 10, dans lequel les données du second système de capteur (520) sont générées au moyen d'un système de capteur à haute résolution et/ou les données du second système de capteur (520) sont générées au moyen d'un programme de simulation destiné à simuler le second système de capteur et/ou les données du second système de capteur (520) sont générées à l'aide du second système de capteur (520) dans l'environnement du premier système de capteur.

12. Procédé selon les revendications 7 à 11, dans lequel le réseau neuronal (200) est configuré pour traiter des séries temporelles de données et/ou pour caractériser un état dépendant du temps du réseau neuronal (200) et/ou le réseau neuronal (200) est un réseau neuronal récurrent.

13. Réseau neuronal (200), qui est configuré et entraîné selon l'une des revendications 7 à 12.

14. Procédé selon les revendications 1 à 6, comprenant un réseau neuronal (200) selon la revendication 13.

15. Dispositif de détection, qui est configuré pour mettre en œuvre un procédé selon l'une des revendications 1 à 6 ou 14.
